# EUROPEAN PATENT APPLICATION

(11) **EP 4 353 476 A1**
(43) Date of publication of application: **17.04.2024**
(21) Application number: 22820325.3
(22) Date of filing: 09.06.2022
(51) Int. Cl.: B32B 27/18, B32B 27/00, B32B 27/30, G06K 7/14

(54) **RESIN SUBSTRATE WITH ANTI-FOGGING FILM, TRANSPARENT ARTICLE WITH ANTI-FOGGING FILM, AND COATING LIQUID**

(30) Priority: 11.06.2021 JP 2021098343
(71) Applicant: NIPPON SHEET GLASS COMPANY, LIMITED, Tokyo 108-6321 (JP)
(72) Inventor: HAYASHI Kiyomi, Tokyo 108-6321 (JP); OYA Kazuaki, Tokyo 108-6321 (JP); TAKAHASHI Koji, Tokyo 108-6321 (JP)
(74) Representative: Cabinet Beau de Loménie
(86) International application number: PCT/JP2022/023356
(87) International publication number: WO 2022/260146

(57) **Abstract**

The present invention provides an antifog-film-attached resin substrate that includes: a resin substrate; and an antifog film on a surface of the resin substrate, wherein the antifog film includes: a silane coupling agent and/or a cross-linked structure derived from the silane coupling agent; a water-absorbing polymer; a polyether-modified siloxane; and a C₂-C₈ diol. The silane coupling agent includes: a silane coupling agent A; and a silane coupling agent B and/or a silane coupling agent C. The silane coupling agent A has an amino group, a silicon atom, and a C₁-C₃ hydrocarbon group bonded to the amino group and the silicon atom, the silane coupling agent B has an amino group, a silicon atom, and a C_{4 or more} hydrocarbon group bonded to the amino group and the silicon atom, and the silane coupling agent C is a polymer having a plurality of amino groups.

## Description

### TECHNICAL FIELD

The present invention relates to an antifog-film-attached resin substrate, an article with an antifog film, and a coating liquid for forming an antifog film. The article with an antifog film is, for example, an antifog-film-attached transparent article.

### BACKGROUND ART

Antifog sheets for imparting antifog properties have been under development. Antifog sheets are disposed, more specifically stuck, for use, on or near a site where antifog properties are required. An antifog sheet includes a resin substrate and an antifog film on the surface of the resin substrate. An antifog sheet in some cases can be in the form of an antifog stack that further includes a pressure-sensitive adhesive layer on the surface of a resin substrate opposite to an antifog film and further includes, as necessary, a protective sheet on the surface of the antifog film. However, a resin substrate with an antifog film on its surface may also be, as an article having antifog properties, used as it is, in other words, used without being stuck to other members. In the present description, a resin substrate with an antifog film is referred to as an "antifog-film-attached resin substrate" regardless of use pattern.

For example, Patent Literature 1 discloses an antifog sheet to be stuck, on a glass sheet to be used for a windshield for an automobile, to a surface on a vehicle interior side of an information acquisition region through which light passes to an information acquisition device.

### CITATION LIST

### Patent Literature

Patent Literature 1: WO 2018/016454 A1

### SUMMARY OF INVENTION

### Technical Problem

Antifog properties required for an antifog film included in an antifog-film-attached resin substrate vary greatly depending on the site where the antifog-film-attached resin substrate is to be placed or used. In view of this, the present invention aims to provide a novel antifog-film-attached resin substrate.

### Solution to Problem

In the present description, the mention of QR code being a registered trademark is hereinafter omitted.

The present invention provides an antifog-film-attached resin substrate including:
a resin substrate; and
an antifog film on a surface of the resin substrate, wherein
in a test in which:
   the antifog-film-attached resin substrate is immersed in water at 25°C for 100 hours and removed from the water;
   subsequently the antifog film is exposed for 30 seconds to water vapor generated from water at 90°C to 100°C disposed at a distance of 60 mm from the antifog film downward in a vertical direction; and
   subsequently a judgment is made as to whether information of a QR code disposed at a distance of 110 mm from the antifog film downward in the direction is readable with a camera from an opposite side to a formation side of the antifog film,
   information of a QR code of a 40 mm square size is readable
   where the QR code is a two-dimensional code obtained by encoding, as the information, a character string "Rank:B" under a symbol size of 21 × 21 modules and a specification of error correction level H, in accordance with Japanese Industrial Standards (JIS) X 0510: 2018.

In another aspect, the present invention provides an antifog-film-attached resin substrate including:
a resin substrate; and
an antifog film on a surface of the resin substrate, wherein
the antifog film includes a water-absorbing polymer, and
when a test is performed in which: the antifog-film-attached resin substrate is immersed in water at 25°C for 100 hours and removed from the water; and subsequently the antifog film is exposed for 30 seconds to water vapor generated from water at 90°C to 100°C disposed at a distance of 60 mm from the antifog film downward in a vertical direction,
a transparent continuous film is formed on a surface of the antifog film exposed to the water vapor.

In still another aspect, the present invention provides an antifog-film-attached resin substrate including:
a resin substrate; and
an antifog film on a surface of the resin substrate, wherein
the antifog film includes:
   at least one selected from the group consisting of a silane coupling agent and a cross-linked structure derived from the silane coupling agent;
   a water-absorbing polymer;
   a polyether-modified siloxane; and
   a C₂-C₈ diol,
   the silane coupling agent includes:
      a silane coupling agent A; and
      a silane coupling agent that is at least one selected from the group consisting of a silane coupling agent B and a silane coupling agent C,
      the silane coupling agent A has an amino group, a silicon atom, and a C₁-C₃ hydrocarbon group bonded to the amino group and the silicon atom,
      the silane coupling agent B has an amino group, a silicon atom, and a C_{4 or more} hydrocarbon group bonded to the amino group and the silicon atom, and
      the silane coupling agent C is a polymer having a plurality of amino groups.

In yet another aspect, the present invention provides an antifog-film-attached transparent article including the antifog-film-attached resin substrate according to the present invention.

In another aspect, the present invention provides a coating liquid including:
a silane coupling agent;
a water-absorbing polymer;
a polyether-modified siloxane; and
a C₂-C₈ diol, wherein
the silane coupling agent includes:
   a silane coupling agent A; and
   a silane coupling agent that is at least one selected from the group consisting of a silane coupling agent B and a silane coupling agent C,
   the silane coupling agent A has an amino group, a silicon atom, and a C₁-C₃ hydrocarbon group bonded to the amino group and the silicon atom,
   the silane coupling agent B has an amino group, a silicon atom, and a C_{4 or more} hydrocarbon group bonded to the amino group and the silicon atom, and
   the silane coupling agent C is a polymer having a plurality of amino groups.

### Advantageous Effects of Invention

The present invention provides a novel antifog-film-attached resin substrate.

### BRIEF DESCRIPTION OF DRAWINGS

FIG. 1 is a cross-sectional view showing an example of a stack (antifog sheet) including an antifog-film-attached resin substrate according to an embodiment of the present invention.
FIG. 2 is a cross-sectional view showing another example of the stack (antifog sheet) including the antifog-film-attached resin substrate according to the embodiment.
FIG. 3A is a schematic view for illustrating the outline of a high-temperature water vapor evaluation.
FIG. 3B is another schematic view for illustrating the outline of the high-temperature water vapor evaluation.
FIG. 4A shows a QR code example (10 mm × 10 mm size, recorded information "Rank:SSS") used for the high-temperature water vapor evaluation.
FIG. 4B shows a QR code example (15 mm × 15 mm size, recorded information "Rank:SS") used for the high-temperature water vapor evaluation.
FIG. 4C shows a QR code example (20 mm × 20 mm size, recorded information "Rank:S") used for the high-temperature water vapor evaluation.
FIG. 4D shows a QR code example (30 mm × 30 mm size, recorded information "Rank:A") used for the high-temperature water vapor evaluation.
FIG. 4E shows a QR code example (40 mm × 40 mm size, recorded information "Rank:B") used for the high-temperature water vapor evaluation.

### DESCRIPTION OF EMBODIMENT

An embodiment of the present invention will be described below with reference to the drawings as appropriate. The present invention is not limited to the following embodiment. In the present description, a "main component" refers to a component contained in the highest content among the components contained. Furthermore, "principal surfaces" of a plate-shaped article refer to two surfaces facing away from each other at a predetermined distance, called the thickness.

As disclosed in Patent Literature 1, antifog films often have blended thereto a water-absorbing polymer. A higher water-absorbing polymer content can be expected to enhance the antifog properties of the films. On the other hand, a higher water-absorbing polymer content usually decreases the abrasion resistance of the films. Accordingly, as disclosed in Patent Literature 1, antifog films often have added thereto an inorganic component that compensates for a decrease in abrasion resistance, typically a silica component such as colloidal silica. In contrast, antifog films are not required to have a high-level abrasion resistance, but are sometimes required to have other properties. For example, antifog films are sometimes required to be capable of maintaining antifog properties even when exposed to a harsh environment for a long time. An antifog-film-attached resin substrate according to the present embodiment has been achieved through further studies made from such a perspective, and can exhibit a function of transmitting light without scattering at a high level even when the antifog film is exposed to a harsh environment.

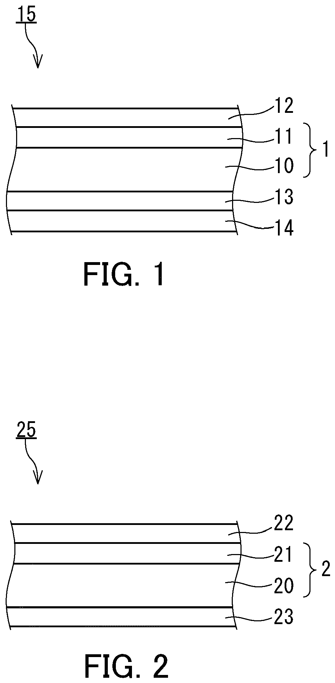

In FIG. 1, an antifog-film-attached resin substrate 1 includes a resin substrate 10 that is the base and an antifog film 11 on the surface of the resin substrate 10. The antifog film 11 is formed on at least a portion of the surface of the resin substrate 10, for example, a principal surface of the resin substrate 10. In FIG. 1, the antifog-film-attached resin substrate 1 is a portion of an antifog sheet 15, and the antifog sheet 15 further includes a pressure-sensitive adhesive layer 13 and so on. The antifog-film-attached resin substrate 1, however, may be used with none of a pressure-sensitive adhesive layer, other layers, and a sheet.

As shown in FIG. 1, the antifog sheet 15 includes the antifog-film-attached resin substrate 1, a protective sheet 12 on the surface of the antifog film 11, and the pressure-sensitive adhesive layer 13 on the surface on the opposite side of the antifog-film-attached resin substrate 1 to the antifog film 11 formation side. The antifog sheet 15 further includes a release sheet 14 stuck to the pressure-sensitive adhesive layer 13. The protective sheet 12 and the release sheet 14 are releasably stuck. The protective sheet 12, the pressure-sensitive adhesive layer 13, and the release sheet 14 are convenient in terms of storing, transporting, and fixing the antifog-film-attached resin substrate 1, but are not essential. For example, instead of using the pressure-sensitive adhesive layer 13, an adhesive agent that is prepared separately may be applied to fix the antifog-film-attached resin substrate 1. In an embodiment in which the antifog-film-attached resin substrate 1 is fixed, the antifog film 11, the resin substrate 10, and the pressure-sensitive adhesive layer 13 or a layer of an adhesive agent applied instead of the pressure-sensitive adhesive layer 13 are stacked in this order.

An antifog sheet 25 shown in FIG. 2 includes an antifog-film-attached resin substrate 2 having a resin substrate 20 and an antifog film 21 on the surface of the resin substrate 20, a protective sheet 22 on the surface of the antifog film 21, and a pressure-sensitive adhesive layer 23 formed on the surface on the opposite side of the antifog-film-attached resin substrate 2 to the antifog film 21 formation side. The protective sheet 22 is releasably stuck to the antifog film 21. The antifog sheet 25 may be a wound body formed by winding the exposed surface of the pressure-sensitive adhesive layer 23 so as to be in contact with the surface of the protective sheet 22. The protective sheet 22 in this form also serves as a release sheet. The object indicated by reference numeral 23 in FIG. 2 may be a rear surface protective sheet. In this case, the protective sheets 22 and 23 are respectively disposed on the uppermost and lowermost layers of the antifog-film-attached resin substrate 2. The layers each will be described.

### [Resin substrate]

The resin material of each of the resin substrates 10 and 20 is not particularly limited, and its examples include polyolefins such as polyethylene and polypropylene, acrylic resins such as methacryl resin (PMMA), polycarbonate (PC), acrylonitrile/styrene resin (AS), acrylonitrile/butadiene/styrene resin (ABS), cycloolefin polymer (COP), vinyl chloride (PVC), triacetyl cellulose (TAC), polyesters such as polyethylene terephthalate (PET), and urethane. The thickness of each of the resin substrates 10 and 20 is, for example, 0.02 to 7.0 mm. The thickness of the resin substrate may be 0.1 to 7.0 mm, even 0.2 to 7.0 mm, and in some cases 3.0 to 5.0 mm. In the case where the resin is an acrylic resin, the thickness of the resin substrate is preferably 2.0 to 3.0 mm. In the case where the resin is polycarbonate, the thickness of the resin substrate is preferably 1.0 to 2.0 mm. The resin substrate is preferably a transparent substrate. The resin substrate may be in the form of a film having a thickness of 0.02 to 0.3 mm. Such a resin film is suitable as the base of an antifog sheet for imparting antifog properties to other articles. A resin substrate having a thickness of more than 0.3 mm, which is slightly too thick to be called a film, is suitable for an application in which the resin substrate is not stuck to other articles.

For example, to ensure wettability, the surface of a resin substrate on which an antifog film is to be formed may be subjected to a plasma treatment prior to antifog film formation. The plasma treatment is a treatment of exposing the resin substrate to plasma. The plasma treatment may be a treatment using plasma in a reduced pressure atmosphere or a treatment using atmospheric-pressure plasma. The atmospheric-pressure plasma treatment may be an AP plasma treatment or a corona discharge treatment.

### [Antifog film]

The film thickness of each of the antifog films 11 and 21 is not limited to a specific value, and is 0.1 to 15 µm, preferably 0.5 to 10 µm, and particularly preferably 0.8 to 6 µm.

The antifog films 11 and 21 each include, for example, a water-absorbing polymer, a polyether-modified siloxane, a C₂-C₈ diol, and a silane coupling agent and/or a cross-linked structure derived from the silane coupling agent. The components each will be described below.

### (Water-absorbing polymer)

Examples of the water-absorbing polymer include at least one selected from the group consisting of a urethane resin, an epoxy resin, an acrylic resin, a polyvinyl acetal resin, and a polyvinyl alcohol resin. Examples of the urethane resin include a polyurethane resin composed of a polyisocyanate and a polyol. Examples of the polyol include acrylic polyol and polyoxyalkylene-based polyol. Examples of the epoxy resin include glycidyl ether-based epoxy resin, glycidyl ester-based epoxy resin, glycidyl amine-based epoxy resin, and cyclic aliphatic epoxy resin. A preferred epoxy resin is cyclic aliphatic epoxy resin. A polyvinyl acetal resin (hereinafter, simply referred to as "polyvinyl acetal") that is a preferred water-absorbing polymer will be described below.

Polyvinyl acetal can be obtained by acetalization of polyvinyl alcohol through a condensation reaction with an aldehyde. The acetalization of polyvinyl alcohol should be performed by any known method, such as a precipitation method using an aqueous medium in the presence of an acid catalyst or a dissolution method using a solvent such as an alcohol. The acetalization can also be performed in parallel with saponification of polyvinyl acetate. The degree of acetalization is preferably 2 to 40 mol%, more preferably 3 to 30 mol%, particularly preferably 5 to 20 mol%, and in some cases preferably 5 to 15 mol%. The degree of acetalization can be measured, for example, by ¹³C nuclear magnetic resonance spectroscopy. Polyvinyl acetal having a degree of acetalization in the above range is suitable for forming an antifog film having a good water absorbency and a good water resistance.

The average degree of polymerization of polyvinyl alcohol is preferably 200 to 4500 and more preferably 500 to 4500. A higher average degree of polymerization is more advantageous in terms of forming an antifog film having a good water absorbency and a good water resistance. However, an excessively high average degree of polymerization excessively increases the solution viscosity, which may adversely affect the film formation. The degree of saponification of polyvinyl alcohol is preferably 75 to 99.8 mol%.

Examples of the aldehyde to be subjected to a condensation reaction with polyvinyl alcohol include aliphatic aldehydes such as formaldehyde, acetaldehyde, butyraldehyde, hexylcarbaldehyde, octylcarbaldehyde, and decylcarbaldehyde. The examples further include aromatic aldehydes including: benzaldehyde; 2-methylbenzaldehyde, 3-methylbenzaldehyde, 4-methylbenzaldehyde, and other alkyl-substituted benzaldehydes; chlorobenzaldehyde and other halogen-substituted benzaldehydes; substituted benzaldehydes in which a hydrogen atom is substituted by a functional group other than an alkyl group, such as a hydroxy group, an alkoxy group, an amino group, or a cyano group; and condensed aromatic ring aldehydes such as naphthaldehyde and anthraldehyde. Aromatic aldehydes, which are highly hydrophobic, are advantageous in terms of forming a water-absorbing film having a low degree of acetalization and an excellent water resistance. Using aromatic aldehydes is advantageous also in terms of forming a highly water-absorbing film with a large amount of a hydroxy group remained. Polyvinyl acetal preferably contains an acetal structure derived from an aromatic aldehyde, particularly from benzaldehyde.

The content of the water-absorbing polymer in the antifog film is, for example, 20 to 90 mass%, preferably 30 to 80 mass%, and more preferably 35 to 75 mass%. The water-absorbing polymer may be the main component of the antifog film.

### (Polyether-modified siloxane)

The polyether-modified siloxane is a compound having a polyether chain as at least one selected from the group consisting of a molecular chain bonded to a terminal of a main chain of siloxane and a molecular chain bonded as a side chain of the main chain of siloxane. Siloxane is a compound having a siloxane bond (Si-O-Si) as a skeleton. The structural unit of the polyether chain is not particularly limited, and is, for example, ethylene oxide or propylene oxide. The polyether chain may include, as the structural unit, only one structural unit or two or more structural units.

The polyether-modified siloxane may be a polyether-modified silicone. Silicone is a polymer having a siloxane bond (Si-O-Si) as a skeleton. Examples of the polyether-modified silicone include SILFACE SAG503A manufactured by Nissin Chemical Industry Co., Ltd.

The content of the polyether-modified siloxane in the antifog film is, for example, 0.5 to 30 mass%, preferably 1 to 25 mass%, and more preferably 3 to 20 mass%.

### (Diol)

A C₂-C₈ diol, in other words, a diol having 2 to 8 carbon atoms may include, for example, at least one selected from the group consisting of ethylene glycol, diethylene glycol, propylene glycol, dipropylene glycol, butanediol, pentanediol, and hexanediol. The diol may be a C₂-C₆ diol. Examples of a preferred diol include at least one selected from the group consisting of butanediol, propylene glycol, and dipropylene glycol. The antifog film may include, as a particularly preferred diol, propylene glycol and/or dipropylene glycol.

The content of the C₂-C₈ diol in the antifog film is, for example, 0.01 to 30 mass%, preferably 0.05 to 20 mass%, and more preferably 0.1 to 10 mass%.

### (Silane coupling agent and cross-linked structure derived therefrom)

The silane coupling agent includes an amino-containing silane coupling agent (hereinafter, also referred to as "aminosilane"). The amino group may be any of a primary amino group, a secondary amino group, and a tertiary amino group, and is preferably a primary amino group and a secondary amino group. The aminosilane desirably includes: a silane coupling agent A; and a silane coupling agent that is a silane coupling agent B and/or a silane coupling agent C. The silane coupling agent desirably includes a silane coupling agent E in addition to the aminosilane. The silane coupling agent E includes a reactive functional group other than an amino group. The silane coupling agents each will be described below.

### (Silane coupling agent A)

The silane coupling agent A has an amino group, a silicon atom, and a C₁-C₃ hydrocarbon group bonded to the amino group and the silicon atom. The hydrocarbon group may be an alkylene group. The silane coupling agent A may include one silicon atom per molecule. Examples of the silane coupling agent A include silicon compounds each having a hydrolyzable group represented by Formula (I). The silicon compounds each having a hydrolyzable group represented by Formula (I) may be used alone or in combination.

H₂N-L¹-SiY₃₋ₙXₙ (I)

In Formula (I), n represents an integer of 1 to 3.

X is a hydrolyzable group or a halogen atom. Examples of the hydrolyzable group include at least one selected from the group consisting of an alkoxyl group, an acetoxy group, an alkenyloxy group, and an amino group. Examples of a preferred alkoxyl group include a C₁-C₄ alkoxyl group (a methoxy group, an ethoxy group, a propoxy group, and a butoxy group). Examples of a preferred halogen atom include chlorine.

Y is a C₁-C₃ alkyl group. Preferred alkyl groups are a methyl group and an ethyl group.

L¹ is a C₁-C₃ hydrocarbon group, preferably a C₁-C₃ alkylene group. Examples of the hydrocarbon group include a methylene group, an ethylene group, an n-propylene group, an isopropylene group, a vinylene group, and a propenylene group.

A compound in which X in Formula (I) is an alkoxyl group is called a silicon alkoxide. In Formula (I), n is preferably 3. That is, the silane coupling agent A is preferably a trifunctional silicon alkoxide having a reactive functional group represented by H₂N-L¹-SiX₃ in Formula (I).

Examples of the trifunctional silicon alkoxide having a reactive functional group include an aminoalkyltrialkoxysilane. Examples of the aminoalkyltrialkoxysilane include 3-aminopropyltrimethoxysilane (APTMS) and 3-aminopropyltriethoxysilane (APTES).

### (Silane coupling agent B)

The silane coupling agent B has an amino group, a silicon atom, and a C_{4 or more}, preferably C_{6 or more} hydrocarbon group bonded to the amino group and the silicon atom. The hydrocarbon group may be an alkylene group. The silane coupling agent B may include one silicon atom per molecule. Examples of the silane coupling agent B include silicon compounds each having a hydrolyzable group represented by Formula (II). The silicon compounds each having a hydrolyzable group represented by Formula (II) may be used alone or in combination.

R²HN-L²-SiY₃₋ₙXₙ (II)

In Formula (II), n represents an integer of 1 to 3.

L² is a C_{4 or more} hydrocarbon group, preferably a C_{4 or more} alkylene group. The carbon number of the hydrocarbon group is preferably 6 or more and may be 12 or less. Examples of a preferred alkylene group include a butylene group, a hexylene group, a heptylene group, an octylene group, and a dodecylene group.

R² is a hydrogen atom or a hydrocarbon group that may have a substituent. The carbon number of this hydrocarbon group is not particularly limited, and is, for example, 4 to 12, and may be 3 or less. The substituent may be a reactive functional group. The reactive functional group is, for example, at least one selected from the group consisting of an epoxy group, an amino group, a mercapto group, an isocyanate group, an acrylic group, and a methacrylic group, and is preferably an amino group.

X is a hydrolyzable group or a halogen atom. Specific examples of the hydrolyzable group and the halogen atom are as described above. Y is a C₁-C₃ alkyl group. Specific examples of the C₁-C₃ alkyl group are as described above.

A specific example of the silane coupling agent B having a preferred structure described above is KBM-6803 manufactured by Shin-Etsu Chemical Co., Ltd.

### (Silane coupling agent C)

The silane coupling agent C is a polymer having a plurality of amino groups. The silane coupling agent C may be an organic polymer-type silane coupling agent. The organic polymer-type silane coupling agent may have a structure in which an organic polymer forming a main chain has bonded thereto: a plurality of functional groups each including a silicon atom to which a hydrolyzable group is bonded; and a plurality of functional groups each including an amino group. The silane coupling agent C typically has a structure in which three or more amino groups are included.

A specific example of the silane coupling agent C having a preferred structure described above is X-12-972F (manufactured by Shin-Etsu Chemical Co., Ltd.).

### (Silane coupling agent E)

The silane coupling agent may include a silane coupling agent E in addition to the aminosilane. The silane coupling agent E does not include an amino group and includes a reactive functional group other than an amino group. The reactive functional group other than an amino group may be at least one selected from the group consisting of an epoxy group, a mercapto group, and an isocyanate group. The silane coupling agent E may include one silicon atom per molecule. Examples of the silane coupling agent E include silicon compounds each having a hydrolyzable group represented by Formula (III). The silicon compounds each having a hydrolyzable group represented by Formula (III) may be used alone or in combination.

R³SiY₃₋ₙXₙ (III)

In Formula (III), n represents an integer of 1 to 3.

R³ is a hydrocarbon group in which at least one hydrogen atom is substituted by a reactive functional group. The carbon number of the hydrocarbon group is not particularly limited, and is, for example, 1 to 6, and particularly 1 to 3. The reactive functional group is preferably an epoxy group (hereinafter, a silane coupling agent having an epoxy group is also referred to as "epoxysilane"). The epoxy group may be included as a portion of a glycidyl group.

X is a hydrolyzable group or a halogen atom. Specific examples of the hydrolyzable group and the halogen atom are as described above. Y is a C₁-C₃ alkyl group. Specific examples of the C₁-C₃ alkyl group are as described above.

A compound in which X in Formula (III) is an alkoxyl group is called a silicon alkoxide. In Formula (III), n is preferably 3. That is, the silane coupling agent E is preferably a trifunctional silicon alkoxide having a reactive functional group represented by R³SiX₃ in Formula (III).

Preferred specific examples of the silane coupling agent E include a glycidoxyalkyltrialkoxysilane. Examples of the glycidoxyalkyltrialkoxysilane include 2-(3,4-epoxycyclohexyl)ethyltrimethoxysilane, 3-glycidoxypropyltrimethoxysilane (GPTMS), and 3-glycidoxypropyltriethoxysilane.

In the antifog film, at least a portion of the silane coupling agent reacts with a different component to form a cross-linked structure. Examples of the different component include an organic component such as the water-absorbing polymer and the hydroxy group on the surface of the base.

The silane coupling agent A and the silane coupling agent B and/or the silane coupling agent C are added in a mass ratio of, for example, preferably 1:5 to 5:1, and particularly preferably 1:3 to 3:1. The sum of these aminosilanes and the silane coupling agent E are added in a mass ratio of preferably 1:2 to 5:1, and particularly preferably 1:1 to 3:1.

The content of the silane coupling agent in the antifog film is, for example, 1 to 40 mass%, preferably 3 to 30 mass%, and more preferably 6 to 25 mass%.

The silane coupling agent A is a component that can contribute to making the polyether-modified siloxane not to be prone to elution from the antifog film. In the case where the polyether-modified siloxane is not prone to elution from the antifog film even after a long-time contact of the antifog film with moisture, the antifog film tends to maintain the hydrophilicity. The silane coupling agent B is a component that can impart an adequate hydrophobicity to the antifog film. In the case where an adequate hydrophobicity of the antifog film can suppress water penetration between the antifog film and the resin substrate even after a long-time contact of the antifog film with moisture, the antifog film tends to maintain the adhesion to the resin substrate. The silane coupling agent C is a component that can enhance the adhesion of the antifog film to the resin substrate by a plurality of amino groups.

### (Additional components)

The antifog film may contain an ultraviolet absorber, an infrared absorber, a leveling agent (surface conditioner), a light stabilizer, and the like as appropriate in addition to the above components. These components, however, are added in desirably 20 mass% or less, more desirably 10 mass% or less, and particularly desirably 5 mass% or less, relative to the antifog film. The antifog film may or may not contain colloidal silica or other silica fine particles. The content of the silica fine particles in the antifog film may be, for example, 10 to 60 mass%, and may be limited to less than 5 mass%, even less than 3 mass%, or particularly less than 1 mass%. The content of oxide fine particles including silica fine particles may also be about the same as described above for the silica fine particles. The antifog film may or may not contain oxide fine particles typified by silica fine particles. Note that even in the case where the antifog film contains no silica fine particles, the antifog film can contain a siloxane component contained in the polyether-modified siloxane, the silane coupling agent, etc.

### [Pressure-sensitive adhesive layer]

As will be described later, the pressure-sensitive adhesive layer 13 only needs to be capable of fixing, with a sufficient strength, the antifog-film-attached resin substrate 1 to its sticking spot or site. Specifically, it is possible to use a pressure-sensitive adhesive obtained by polymerizing, for example, a (meth)acrylic or rubber monomer having tackiness at normal temperature and setting the polymerization result to a desired glass transition temperature. Examples of an applicable acrylic monomer include methyl acrylate, ethyl acrylate, butyl acrylate, stearyl acrylate, and 2-ethylhexyl acrylate. Examples of an applicable methacrylic monomer include ethyl methacrylate, butyl methacrylate, isobutyl methacrylate, and stearyl methacrylate. In the case where the pressure-sensitive adhesive layer is applied through heat lamination or the like, an organic substance that softens at the lamination temperature may be used. The glass transition temperature can be adjusted, for example, by changing the monomer blending ratio.

### [Protective sheet and release sheet]

The protective sheet 12 and the release sheet 14 are disposed to protect the antifog film 11 and the pressure-sensitive adhesive layer 13, respectively. The release sheet 14 can be a sheet obtained by applying, onto a sheet-like base made of polyethylene terephthalate, polypropylene, polyethylene, or the like, a silicone or other release agent. That is, the application surface of the base, onto which the release agent has been applied, is stuck to the pressure-sensitive adhesive layer 13. The protective sheet 12 can be a sheet obtained by applying, onto a base similar to the base of the release sheet 14, a pressure-sensitive adhesive having a low pressure-sensitive adhesiveness enough to be easily released.

### [Method for manufacturing antifog-film-attached resin substrate]

Next, a method for manufacturing the antifog-film-attached resin substrate 1 will be described. First, the antifog film 11 is formed on one surface of the resin substrate 10. The antifog film can be formed by applying, onto the surface of the resin substrate, a coating liquid for forming the antifog film (a coating liquid for forming an antifog film), and heating the resin substrate on which the coating film has been formed from the coating liquid. The solvent used for preparing the coating liquid and the application method for the coating liquid should be any conventionally known material and method. Examples of the application method include spin coating, roll coating, spray coating, dip coating, flow coating, screen printing, and brush coating. The coating film may be appropriately dried before the heating.

The heating temperature for the resin substrate on which the coating film has been formed is not particularly limited, and is, for example, 100 to 180°C. The heating time is, for example, 5 minutes to 1 hour.

### [Antifog-film-attached transparent article]

The antifog-film-attached resin substrate of the present embodiment can be, as an antifog sheet for imparting antifog properties, stuck for use as appropriate to an article for which antifog properties are required. Specific examples of the article to which the antifog-film-attached resin substrate is to be stuck include: windows for vehicles and buildings; building facades; mirrors for houses, housing equipment, vehicles, and portable use; optical components, such as lenses and optical filters; cover components for image display devices; vehicle headlights; liquid crystal displays equipped with touch panels, such as electronic blackboards; head mounted displays for virtual reality (VR) goggles and the like; frozen and refrigerated showcases; refrigerators with windows; goggles for skiing and swimming; helmets for motorcycles and the like; safety glasses; sunglasses; and face shields against droplets. The article to which the antifog-film-attached resin substrate is to be stuck is typically a transparent article. The transparent article may be made of glass or a resin. The resin may be an acrylic resin such as methacryl resin (PMMA), polycarbonate (PC), acrylonitrile/styrene resin (AS), acrylonitrile/butadiene/styrene resin (ABS), vinyl chloride (PVC), triacetyl cellulose (TAC), or polyethylene terephthalate (PET). However, as described above, the antifog-film-attached resin substrate of the present embodiment can also be used without being stuck to other articles, that is, the antifog-film-attached resin substrate in itself can also be used as each of the various articles exemplified above.

### [Properties of antifog-film-attached resin substrate]

The antifog film according to the present embodiment can exhibit a function of transmitting transmission light without scattering at a high level, even after a long-time exposure to a harsh environment for antifog films, for example, contact with water. To exhibit this function, the antifog film desirably has, in addition to transparency and water absorbency, water resistance and even hydrophilicity. An antifog film having an insufficient water resistance may cause elution of its components when exposed to moisture for a long time. Furthermore, in the case where an antifog film has hydrophilicity to such an extent that at saturation of the water absorption by the antifog film, excess water is retained as a continuous film on the surface of the antifog film, transmission light can be transmitted without excessive scattering.

### (Transparency/Non-scattering properties of transmission light)

The antifog-film-attached resin substrate according to the present embodiment can transmit transmission light without excessive scattering. Specifically, the antifog-film-attached resin substrate can have a haze ratio of, for example, 5% or less, even 3% or less, particularly 1% or less, and in some cases, 0.4% or less. The antifog-film-attached resin substrate may have a haze ratio of 0.3% or less or even 0.2% or less. The haze ratio is specified in JIS K 7136: 2018.

### (Water resistance/Hydrophilicity)

The antifog-film-attached resin substrate according to the present embodiment can have both water resistance and hydrophilicity. These properties can be evaluated by a method called a high-temperature water vapor evaluation which will be described in detail in the Examples section. This method supplies high-temperature and excessive water vapor to the antifog film with the antifog film turned vertically downward. When the antifog film is brought into contact with this water vapor, a transparent continuous film of water is formed on a portion directly exposed to the water vapor on the surface of the antifog film that is excellent in hydrophilicity and water resistance. Being a "transparent continuous film" can be determined by visually confirming that the continuity as a film, not water drops, is ensured and that the film has not become fogged. Fogging of a film can be caused by whitening of the film due to an insufficient water resistance or by dew condensation on the film surface due to insufficient antifog properties. On the surface of a film having an insufficient hydrophilicity, water is not retained as a continuous film but is dispersed and adhered as water drops. On a film having an insufficient water resistance, fogging of the film due to contact with high-temperature water vapor is observed, and elution of the components of the film, a defect of the film, or the like may occur. The hydrophilicity of the surface is evaluated typically by the contact angle of water. However, this evaluation method only drops an extremely small amount of water drops onto the film, and accordingly does not adequately reproduce a harsh environment. Additionally, the transparent continuous film may coat 80% or more or even 90% or more of the surface of the antifog film exposed to water vapor.

For a more detailed or more phased film evaluation, an information reading evaluation using a QR code can be performed. The details of this evaluation method will be described later in the Examples section as well. In this evaluation method, the antifog-film-attached resin substrate according to the present embodiment even after immersion in water at room temperature for 100 hours can exhibit a good hydrophilicity to such an extent that it is possible to read preferably a QR code "A" of a 30 mm square size, more preferably a QR code "S" of a 20 mm square size, still more preferably a QR code "SS" of a 15 mm square size, and particularly preferably a QR code "SSS" of a 10 mm square size.

The coating liquid according to the present embodiment includes a silane coupling agent, a water-absorbing polymer, a polyether-modified siloxane, and a C₂-C₈ diol, and the silane coupling agent includes: a silane coupling agent A; and a silane coupling agent that is at least one selected from the group consisting of a silane coupling agent B and a silane coupling agent C. As each of the components, the compounds described above can be used, for example. The content of each of the components in the coating liquid should be adjusted as appropriate so that the content of each of the components in the antifog film falls within the range described above. Furthermore, the coating liquid may contain an additional component. Examples of the additional component include water and an alcohol.

### Examples

The present invention will be described below in more detail with reference to examples. First, a method for evaluating antifog-film-attached resin substrates obtained in the examples and comparative examples will be described.

### (Water immersion test)

The antifog-film-attached resin substrate was immersed in a plastic container containing pure water at room temperature (about 25°C) and held in this state for 100 hours. Subsequently, the antifog-film-attached resin substrate was removed and leaned against a holder for drying. The sample dried was subjected to the following appearance evaluation and high-temperature water vapor evaluation.

### • Appearance evaluation

The state of the film surface was evaluated with the naked eye to determine which of the following is met.
G: No change from before the test is observed.
F: Some whitening is observed.
NG: Whitening is observed.
Y: Film elution is observed.

### • Antifog properties evaluation using high-temperature water vapor (High-temperature water vapor evaluation)

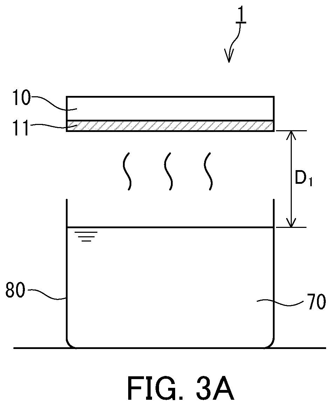

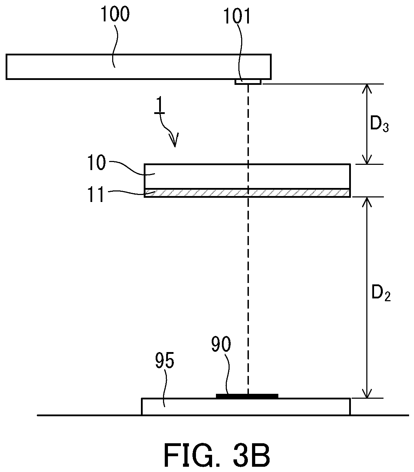

As shown in FIG. 3A, above a stainless-steel heat-retaining cup 80 containing boiled water 70, the antifog-film-attached resin substrate 1 was held in a horizontal position so that the antifog film 11 formation side of the antifog-film-attached resin substrate 1 faced the heat-retaining cup 80. While water vapor was supplied, the temperature of the water 70 was maintained at 90 to 100°C. A distance D₁ between the antifog film 11 and the surface of the water was set to 60 mm. Additionally, the internal space of the heat-retaining cup 80 had a shape of a circular column with a 64-mm diameter opening, and the volume of the water 70 was set to about 130 cc. The antifog-film-attached resin substrate 1 was held above the heat-retaining cup 80 for 30 seconds to supply high-temperature water vapor to the antifog film 11. Subsequently, as shown in FIG. 3B, the heat-retaining cup 80 was removed and a sheet 95 with a predetermined QR code 90 printed thereon was disposed instead. A distance D₂ between the antifog film 11 and the sheet 95 was set to 110 mm. In this state, the QR code 90 was photographed with a camera 100 from above through the antifog-film-attached resin substrate 1 to check whether the information of the QR code 90 was readable. A distance D₃ between the resin substrate 10 and a lens 101 of the camera 100 was set to 80 mm. The process from the removal of the heat-retaining cup 80, that is, the stop of the supply of the high-temperature water vapor, to the photographing of the QR code was performed within 30 seconds.

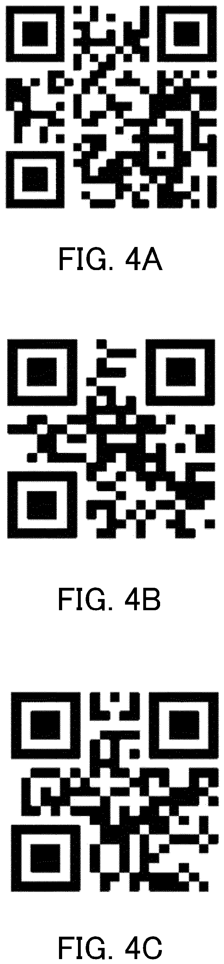

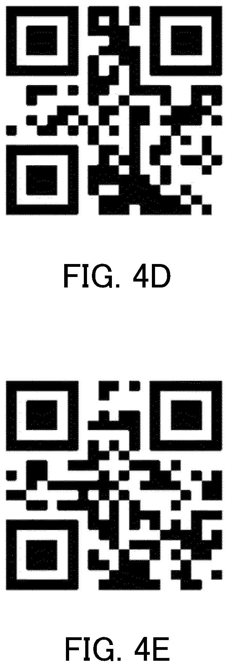

The QR codes used were of the five types shown in FIG. 4A to FIG. 4E. The QR code of the smallest size from which the information was readable was specified and determined as the evaluation results. The size and information of the QR codes used are as follows. For example, in the case where the QR code SSS is readable, character information "Rank:SSS" is displayed.
QR code "SSS": 10 mm × 10 mm, information "Rank:SSS" (FIG. 4A)
QR Code "SS": 15 mm × 15 mm, information "Rank:SS" (FIG. 4B)
QR Code "S": 20 mm × 20 mm, information "Rank:S" (FIG. 4C)
QR Code "A": 30 mm × 30 mm, information "Rank:A" (FIG. 4D)
QR Code "B": 40 mm × 40 mm, information "Rank:B" (FIG. 4E)

The case where none of the QR codes had been readable was evaluated as "X", and the case where the film had been eluted or peeled off due to contact with high-temperature water vapor was evaluated as "Y".

The QR code "SSS" shown in FIG. 4A was obtained by encoding, as the information, the above character string under a symbol size of 25 × 25 modules and a specification of error correction level H, in accordance with JIS X 0510: 2018. The respective QR codes "SS", "S", "A", and "B" shown in FIG. 4B to FIG. 4E are each obtained by encoding, as the information, the above character string under a symbol size of 21 × 21 modules and a specification of error correction level H, in accordance with JIS X 0510: 2018. Note that the character strings are each composed of not double-byte characters but single-byte characters (1-byte codes).

The camera used was smartphone "Xperia XZ2" manufactured by Sony Corporation (model name: SO-03K, OS: Android (registered trademark) (ver. 10)). For QR code reading, the QR code reading function of LINE (registered trademark) application (ver. 11.7.2) was used.

### (Example 1)

### (Preparation of coating liquid)

A coating liquid was prepared by putting the following materials into a glass container for stirring: 72.3 mass% of a polyvinyl acetal resin-containing solution ("S-LEC KX-5" manufactured by Sekisui Chemical Co., Ltd., a solid content of 8 mass%, a degree of acetalization of 9 mol%, and containing an acetal structure derived from benzaldehyde); 1.1 mass% of a polyether-modified dimethylsiloxane ("SILFACE SAG503A" manufactured by Nissin Chemical Industry Co., Ltd.); 1.3 mass% of 3-aminopropyltriethoxysilane (APTES, "KBE-903" manufactured by Shin-Etsu Chemical Co., Ltd., silane coupling agent A); 0.5 mass% of N-2-(aminoethyl)-8-aminooctyltrimethoxysilane ("KBM-6803" manufactured by Shin-Etsu Chemical Co., Ltd., silane coupling agent B); 0.7 mass% of 3-glycidoxypropyltrimethoxysilane (GPTMS, "KBM-403" manufactured by Shin-Etsu Chemical Co., Ltd., silane coupling agent E); 20.0 mass% of propylene glycol; 3.3 mass% of purified water; 0.8 mass% of an alcohol solvent ("Neoethanol P-7" manufactured by Daishin-Chemical Co., Ltd.); 0.05 mass% of hydrochloric acid; and 0.01 mass% of a leveling agent ("KP-341" manufactured by Shin-Etsu Chemical Co., Ltd.).

### (Formation of antifog film)

The coating liquid was applied onto the resin substrate to obtain an antifog-film-attached resin substrate. The resin substrate used was a A4 size polyester resin substrate ("COSMOSHINE A4300" manufactured by TOYOBO CO., LTD.). The surface of the resin substrate was subjected to no advance plasma treatment or the like. The application of the coating liquid was performed with an applicator in a slit of 100 µm to form a coating film. Next, the resin substrate on which the coating film had been formed was heated under conditions of 140°C and 9 minutes. The antifog-film-attached resin substrate was thus obtained.

### (Examples 2 and 3)

Antifog-film-attached resin substrates were obtained in the same manner as in Example 1 except that the raw materials and amounts shown in Table 1 were used in the preparation of the coating liquid. In Example 3, instead of the silane coupling agent B, a polymer-type polyfunctional aminosilane ("X-12-972F" manufactured by Shin-Etsu Chemical Co., Ltd.; silane coupling agent C) was used. In Examples 2 and 3, the amount of the alcohol solvent was decreased by the amount of the silane coupling agent increased.

### (Example 4)

### (Preparation of coating liquid)

A coating liquid was obtained in the same manner as in Example 1 except that the raw materials and amounts shown in Table 1 were used in the preparation of the coating liquid. In Example 4, the amounts of purified water and the alcohol solvent were increased by the amount of the water-absorbing polymer decreased. Specifically, in Example 4, 18.5 mass% of purified water and 9.6 mass% of the alcohol solvent were used in the preparation of the coating liquid.

### (Formation of antifog film)

The coating liquid was applied onto the resin substrate to obtain an antifog-film-attached resin substrate. The resin substrate used was a polycarbonate substrate ("PC1600" manufactured by C.I. TAKIRON Corporation) having a size of 50 mm × 50 mm and a thickness of 2 mm. The surface of the resin substrate was subjected to a plasma treatment in advance. The application of the coating liquid was performed with a spin coater to form a coating film. Next, the resin substrate on which the coating film had been formed was heated under conditions of 130°C and 30 minutes. The antifog-film-attached resin substrate was thus obtained.

### (Example 5)

An antifog-film-attached resin substrate was obtained in the same manner as in Example 4 except that the raw materials and amounts shown in Table 1 were used in the preparation of the coating liquid. In Example 5, the amount of the alcohol solvent was decreased by the amount of propylene glycol increased.

### (Comparative Examples 1 to 14)

Antifog-film-attached resin substrates were obtained in the same manner as in Example 1 except that the raw materials and amounts shown in Table 2 were used in the preparation of the coating liquid. Furthermore, in Comparative Examples 1 to 14, the amount of the alcohol solvent was increased by the amount of the component that was not added.

The results of the water immersion test are shown in Tables 1 and 2. Additionally, in some of the comparative examples, the antifog film had become whitened or partially eluted, and no high-temperature water vapor evaluation was performed.

**[Table 1]**

| Example | Water-absorbing polymer | Polyether-modified siloxane | Diol | Epoxysilane E | Aminosilnane | | | Water immersion test | |
|---|---|---|---|---|---|---|---|---|---|
| | | | | | A | B | C | Appearance | High-temperature water vapor |
| 1 | 72.3 | 1.1 | 20.0 | 0.7 | 1.3 | 0.5 | - | G | SSS |
| 2 | 72.3 | 1.1 | 20.0 | 0.9 | 1.3 | 0.5 | - | G | SSS |
| 3 | 72.3 | 1.1 | 20.0 | 0.9 | 1.3 | - | 3.3 | G | SSS |
| 4 | 48.2 | 0.8 | 20.0 | 0.9 | 1.2 | 0.8 | - | G | SSS |
| 5 | 48.2 | 1.1 | 25.0 | 0.7 | 1.2 | 0.5 | - | G | SSS |

| | | | | | | | | | |
|---|---|---|---|---|---|---|---|---|---|
| • Numerical values in mass% | | | | | | | | | |

**[Table 2]**

| Compar. Example | Water-absorbing polymer | Polyether-modified siloxane | Diol | Epoxysilane E | Aminosilnane | | | Water immersion test | |
|---|---|---|---|---|---|---|---|---|---|
| | | | | | A | B | C | Appearance | High-temperature water vapor |
| 1 | 72.3 | - | - | 0.9 | - | - | - | G | X |
| 2 | 72.3 | - | 20.0 | 0.9 | - | - | - | G | X |
| 3 | 72.3 | - | - | 0.9 | 1.3 | - | - | G | X |
| 4 | 72.3 | - | - | 0.9 | - | 0.5 | - | G | X |
| 5 | 72.3 | 1.1 | - | 0.9 | - | - | - | Y | - |
| 6 | 72.3 | - | 20.0 | 0.9 | 1.3 | - | - | G | X |
| 7 | 72.3 | - | 20.0 | 0.9 | - | 0.5 | - | NG | - |
| 8 | 72.3 | 1.1 | 20.0 | 0.9 | - | - | - | Y | - |
| 9 | 72.3 | - | - | 0.9 | 1.3 | 0.5 | - | G | X |
| 10 | 72.3 | 1.1 | - | 0.9 | 1.3 | - | - | NG | - |
| 11 | 72.3 | 1.1 | - | 0.9 | - | 0.5 | - | Y | - |
| 12 | 72.3 | - | 20.0 | 0.9 | 1.3 | 0.5 | - | G | X |
| 13 | 72.3 | 1.1 | 20.0 | 0.9 | - | 0.5 | - | NG, Y | - |
| 14 | 72.3 | 1.1 | - | 0.9 | 1.3 | 0.5 | - | NG | - |

| | | | | | | | | | |
|---|---|---|---|---|---|---|---|---|---|
| • Numerical values in mass% | | | | | | | | | |

The antifog-film-attached resin substrate according to the examples were each evaluated as "SSS" in the high-temperature water vapor evaluation performed after the water immersion test. In each of the antifog films according to the examples, at the stop time point of the supply of high-temperature water vapor, a continuous film of water having a uniform thickness was formed on the surface of the antifog film, and the transparency of the antifog-film-attached resin substrate was ensured while neither whitening of the film itself nor fogging due to dew condensation was observed. Additionally, the transparent continuous films of the examples evaluated as "SSS" each coated 90% or more of the surface of the antifog film exposed to water vapor, more specifically, coated substantially the entirety of the above surface. In contrast, in each of the comparative examples, after the water immersion test, an appearance defect was observed that was due to elution of the antifog film or whitening of the film; or even in the case where this does not hold true, large water drops spread to adhere onto the surface of the antifog film was observed that was due to the supply of high-temperature water vapor. The results evaluated as "NG, Y" in Comparative Example 13 indicate that the film was partially eluted and the remaining film was also whitened.

Moreover, the following evaluations were performed on Examples 1 to 5. The results are shown in Table 3.

**[Table 3]**

| Example | Initial state | | Repeated antifog test | | Alcohol abrasion test | |
|---|---|---|---|---|---|---|
| | Appearance | Haze ratio(%) | Appearance | High-temperatu re water vapor | Appearance | High-temperatu re water vapor |
| 1 | G | 0.10 | G | SSS | G | SSS |
| 2 | G | 0.10 | G | SSS | G | SSS |
| 3 | G | 0.10 | G | SSS | G | SSS |
| 4 | G | 0.25 | G | SSS | G | SSS |
| 5 | G | 0.32 | G | SSS | G | SSS |

### (Initial state)

The antifog-film-attached resin substrate in the initial state where the antifog film had been formed was subjected to an appearance evaluation in the same manner as described above, and furthermore subjected to a haze ratio measurement.

### (Repeated antifog test)

The antifog-film-attached resin substrate in the initial state where the antifog film had been formed was subjected to supply of high-temperature water vapor to the antifog film in the same manner as in the high-temperature water vapor evaluation. Subsequently, the antifog-film-attached resin substrate was removed and leaned against a holder for drying. The sample dried was again repeatedly subjected to supply of high-temperature water vapor to the antifog film and drying, where high-temperature water vapor was supplied to the antifog film 10 times. Subsequently, an appearance evaluation and a high-temperature water vapor evaluation were performed in the same manner as described above. Additionally, in the high-temperature water vapor evaluation, the QR code photographing was performed without performing the 11th water vapor supply (immediately after the completion of the 10th water vapor supply).

### (Alcohol abrasion test)

An amount of 0.5 cc of an alcohol solvent containing ethanol as the main component ("FineeterA-10" manufactured by FUTABA PURE CHEMICAL CO, LTD.) was dropped for impregnation onto a nonwoven fabric wiper ("BEMCOT M-3II" manufactured by Asahi Kasei Corporation) cut into a width of 25 mm, and then the wiper and the antifog-film-attached resin substrate were set in a reciprocating abrasion tester. With a load of 400 g applied to the wiper, reciprocation for a length of 30 mm was performed 20 times. Subsequently, an appearance evaluation and a high-temperature water vapor evaluation were performed in the same manner as described above.

## Claims

1. An antifog-film-attached resin substrate comprising:
a resin substrate; and
an antifog film on a surface of the resin substrate, wherein
in a test in which:
the antifog-film-attached resin substrate is immersed in water at 25°C for 100 hours and removed from the water;
subsequently the antifog film is exposed for 30 seconds to water vapor generated from water at 90°C to 100°C disposed at a distance of 60 mm from the antifog film downward in a vertical direction; and
subsequently a judgment is made as to whether information of a QR code disposed at a distance of 110 mm from the antifog film downward in the direction is readable with a camera from an opposite side to a formation side of the antifog film,
information of a QR code of a 40 mm square size is readable
where the QR code is a two-dimensional code obtained by encoding, as the information, a character string "Rank:B" under a symbol size of 21 × 21 modules and a specification of error correction level H, in accordance with Japanese Industrial Standards (JIS) X 0510: 2018.

2. An antifog-film-attached resin substrate comprising:
a resin substrate; and
an antifog film on a surface of the resin substrate, wherein
the antifog film includes a water-absorbing polymer, and
when a test is performed in which: the antifog-film-attached resin substrate is immersed in water at 25°C for 100 hours and removed from the water; and subsequently the antifog film is exposed for 30 seconds to water vapor generated from water at 90°C to 100°C disposed at a distance of 60 mm from the antifog film downward in a vertical direction,
a transparent continuous film is formed on a surface of the antifog film exposed to the water vapor.

3. The antifog-film-attached resin substrate according to claim 1 or 2, wherein
the antifog film includes:
at least one selected from the group consisting of a silane coupling agent and a cross-linked structure derived from the silane coupling agent;
a water-absorbing polymer;
a polyether-modified siloxane; and
a C₂-C₈ diol,
the silane coupling agent includes:
a silane coupling agent A; and
a silane coupling agent that is at least one selected from the group consisting of a silane coupling agent B and a silane coupling agent C,
the silane coupling agent A has an amino group, a silicon atom, and a C₁-C₃ hydrocarbon group bonded to the amino group and the silicon atom,
the silane coupling agent B has an amino group, a silicon atom, and a C_{4 or more} hydrocarbon group bonded to the amino group and the silicon atom, and
the silane coupling agent C is a polymer having a plurality of amino groups.

4. An antifog-film-attached resin substrate comprising:
a resin substrate; and
an antifog film on a surface of the resin substrate, wherein
the antifog film includes:
at least one selected from the group consisting of a silane coupling agent and a cross-linked structure derived from the silane coupling agent;
a water-absorbing polymer;
a polyether-modified siloxane; and
a C₂-C₈ diol,
the silane coupling agent includes:
a silane coupling agent A; and
a silane coupling agent that is at least one selected from the group consisting of a silane coupling agent B and a silane coupling agent C,
the silane coupling agent A has an amino group, a silicon atom, and a C₁-C₃ hydrocarbon group bonded to the amino group and the silicon atom,
the silane coupling agent B has an amino group, a silicon atom, and a C_{4 or more} hydrocarbon group bonded to the amino group and the silicon atom, and
the silane coupling agent C is a polymer having a plurality of amino groups.

5. The antifog-film-attached resin substrate according to claim 3 or 4, wherein the diol includes propylene glycol.

6. The antifog-film-attached resin substrate according to any one of claims 3 to 5, wherein
the water-absorbing polymer includes a polyvinyl acetal resin.

7. The antifog-film-attached resin substrate according to any one of claims 1 to 6, further comprising:
a protective sheet on a surface of the antifog film; and
a pressure-sensitive adhesive layer formed on a surface on the opposite side of the resin substrate to the formation side of the antifog film.

8. An antifog-film-attached transparent article comprising the antifog-film-attached resin substrate according to any one of claims 1 to 7.

9. A coating liquid comprising:
a silane coupling agent;
a water-absorbing polymer;
a polyether-modified siloxane; and
a C₂-C₈ diol, wherein
the silane coupling agent includes:
a silane coupling agent A; and
a silane coupling agent that is at least one selected from the group consisting of a silane coupling agent B and a silane coupling agent C,
the silane coupling agent A has an amino group, a silicon atom, and a C₁-C₃ hydrocarbon group bonded to the amino group and the silicon atom,
the silane coupling agent B has an amino group, a silicon atom, and a C_{4 or more} hydrocarbon group bonded to the amino group and the silicon atom, and
the silane coupling agent C is a polymer having a plurality of amino groups.
